# EUROPÄISCHE PATENTANMELDUNG

(11) **EP 2 343 680 A1**
(43) Veröffentlichungstag der Anmeldung: **13.07.2011**
(21) Anmeldenummer: 09075554.7
(22) Anmeldetag: 15.12.2009
(51) Int. Cl.: G06Q 30/00

(54) **System zum Tanken auf Vorrat**

(71) Anmelder: Schulz, Michael, 13156 Berlin (DE)
(72) Erfinder: Schulz, Michael, 13156 Berlin (DE)
(74) Vertreter: Boeckh, Tobias

(57) **Zusammenfassung**

Die Erfindung betrifft ein System zum Tanken eines Kraftstoffvolumens auf Vorrat für ein Kraftfahrzeug eines Käufers von einem Verkäufer des Kraftstoffvolumens. Der Käufer kann ein frei wählbares Kraftstoffvolumen zu einem definierten Preis, insbesondere des Tagespreises auf Vorrat erwerben und das Kraftstoffvolumen innerhalb eines Zeitraumes verbrauchen, wobei alle Daten über den Kauf auf einem Speichermedium oder in einem Computerprogrammprodukt verarbeitet und gespeichert werden.

## Beschreibung

Die Erfindung betrifft ein System, zum Tanken von Kraftstoff auf Vorrat, wobei ein Käufer ein frei wählbares Kraftstoffvolumen zu einem definierten Preis, insbesondere des Tagespreises auf Vorrat erwirbt und das Kraftstoffvolumen innerhalb eines Zeitraumes verbrauchen kann.

Der Straßenverkehr in Deutschland wächst kontinuierlich. Im Jahre 2008 waren circa 49 Millionen Kraftfahrzeuge in Deutschland registriert, wobei hierbei circa 37 Millionen Kraftfahrzeuge privaten Haltern zu zurechnen sind. Die Jahreslaufleistung pro Kraftfahrzeug in Kilometern beträgt in Deutschland ungefähr 12.000 km. Dementsprechend beläuft sich der Jahresverbrauch von Kraftstoff pro Kraftfahrzeug auf 1.000 I. Seit 1999 sind die Preise für Kraftstoffe um ungefähr 50 % gestiegen. Dies ist etwa zu gleichen Teilen auf die fünf Stufen der Ökosteuer und die Steigerung der Produktpreise zurückzuführen. Die steigenden Kraftstoffpreise haben einen starken Rückgang des Kraftstoffverbrauchs zur Folge.

Für den Kraftfahrzeug-(Kfz) Nutzer ist wesentlich, dass der Endkundenpreis für Kraftstoffe jeweils in Abhängigkeit von den Weltmarktpreisen für Erdöl beziehungsweise die raffinierten Veredelungsprodukte abhängig ist. Die tendenziell steigende Entwicklung der Endverbraucherpreise wird maßgeblich durch die zunehmende Knappheit fossiler Brennstoffe und der auf ihnen lastenden ökologischen Abgaben determiniert. Hierbei verläuft die Preisentwicklung des Kraftstoffes grundsätzlich parallel zur Entwicklung der Weltmarktpreise, d. h. die Preise für Kraftstoff werden im Wesentlichen ohne zeitliche Verzögerung den Rohölpreisen angepasst. Neben dem zentralen Einflussfaktor der Rohölpreisentwicklung auf die Preisbildung der Kraftstoffkosten für den Endverbraucher, spielt die Nachfrage orientierte Steuerung der Preise eine relevante Rolle. In diesem Zusammenhang sind insbesondere die preislichen Spitzen der Kraftstoffkosten zur Osterzeit zu bemerken, die empirisch belegt sind und für den Verbraucher eine spontane Erhöhung der Kraftstoffkosten bedeuten. Diese Spitzen bedeuten enorme finanzielle Belastungen für den Kfz-Nutzer.

Insbesondere in den letzten Jahren ist der Anteil der Mobilitätskosten am verfügbaren Einkommen eines Kfz-Halters deutlich gestiegen. Die Mobilitätskosten für ein Kraftfahrzeug setzen sich nach ihrer Verwendung wie folgt zusammen: Anschaffungskosten, Finanzierungskosten, Kraftstoffkosten, Reparatur, Instandhaltung, Steuern und Abgaben und Gebühren (Strafgebühren, Parkgebühren, etc.). Somit bewegen sich die haushaltbezogenen Mobilitätskosten je nach Größe des Haushalts zwischen 200 bis 600 € pro Monat. Der Anteil der Kraftstoffkosten liegt ohne Berücksichtigung der Anschaffungskosten zwischen 30 und 65 %. Es ist perspektivisch jedoch davon auszugehen, dass durch die zunehmende Wettbewerbsintensität im Automobilsektor einerseits, insbesondere durch neue Wettbewerbe aus dem asiatischen Raum und die weiterhin knapper werdende Ressource Rohöl andererseits, der Anteil der variablen Kraftstoffkosten an den gesamten Mobilitätskosten weiterhin ansteigen wird.

In einer zunehmend internationalisierten und globalisierten Welt ist das Thema der Mobilität unverzichtbar. Dies betrifft neben den Güterströmen auch den Personenverkehr, unabhängig davon ob als Mobilitätsmittel Flugzeuge, Schiffe, Bahnen oder motorbetriebene Kraftfahrzeuge eingesetzt werden. Dieser Trend wird insbesondere unter dem zusätzlichen Aspekt der demographischen Entwicklung in Ländern wie beispielsweise Deutschland zunehmend erkennbar. Das Bedürfnis nach einem individualisierten Personenverkehr steigt kontinuierlich an. Indikatoren, die diese Entwicklung unterstützen, sind beispielsweise ältere Menschen als Kfz-Nutzer und die Etablierung vernetzter, auch intermodaler Mobilitätsangebote. Betrachtet man nun wiederum das zunehmende Mobilitätsbedürfnis im Kontext der Entwicklung der verfügbaren Einkommen, wird deutlich, dass neben der Qualifizierung des Mobilitätsangebotes und Nutzens, die Entwicklung der Mobilitätskosten für die privaten Haushalte erheblich an Bedeutung zugenommen hat. Den privaten Haushalten steht es frei, in Bezug auf das Einkommen bei den Investitionskosten in ein Kfz beziehungsweise den Reparatur- und Serviceleistungen Kosteneinsparungen zu suchen. Jedoch ist hierbei zu bemerken, dass den privaten Haushalten keine Möglichkeit zur Verfügung steht, die Kraftstoffkosten zu senken, ohne auf beispielsweise ein Hybrid- oder Niedrigenergiefahrzeug umzusteigen.

Die persönliche Dispositionsfreiheit eines Kfz-Nutzers in Bezug auf die Mobilitätskostenkomponente Kraftstoff wäre vollumfänglich gegeben, wenn die Entscheidung zum Kauf von Kraftstoff bei definierter Qualität und Preis nach Menge und Zeitpunkt damit auf Vorrat möglich wäre. Es ist möglich, dass ein Kfz-Nutzer zusätzlich zu der Tankfüllung für sein Kfz Kraftstoff physisch in separate Behälter abfüllt und bis zum jeweiligen Verbrauchszeitpunkt lagert. Jedoch bedarf die Lagerung von Kraftstoff erhöhter Sicherheitsmaßnahmen, was wiederum ggf. mit Lagerkosten verbunden ist. Außerdem verliert der Kraftstoff durch die Lagerung an Qualität und kann so ggf. Schäden am Motor hervorrufen. Somit wird die Lagerung von Kraftstoff in Behältern nur von einer geringen Anzahl von Kfz-Nutzern in Anspruch genommen. Besonders im Hinblick auf die variierenden Kraftstoffkosten wäre es für einen Kfz-Nutzer vorteilhaft, wenn die temporäre Lagerung von Kraftstoff möglich wäre. Die Preise für Kraftstoff lagen in der Spitze im Jahre 2008 bei circa 1,50 € pro Liter und betrugen im Jahresdurchschnitt circa 1,00 € pro Liter. Dahingegen stiegen die Kraftstoffkosten im Juni 2009 wieder auf circa 1,30 € pro Liter. Hierdurch ist es für den Verbraucher nicht möglich, die Kosten für ein Kfz zu kalkulieren, da die Kraftstoffkosten einer starken Variation ausgesetzt sind und einen großen Einfluss auf die Mobilitätskosten ausüben.

Es ist weiterhin zu bemerken, dass durch die aktuelle Finanz- und Wirtschaftskrise eine hohe Unsicherheit bei den Verbrauchern, beispielsweise den Kfz-Nutzern aufgetreten ist, die außerdem durch steigende Verschuldung und Arbeitslosenzahlen begünstigt wird. Somit kann der Verbraucher nicht leichtfertig mit seinem Geld umgehen und kann durch die variierenden Kraftstoffkosten in finanzielle Not geraten.

Die Aufgabe der Erfindung war es demgemäß ein System für den Verbraucher bereitzustellen, das einen Kauf von Kraftstoff und dessen Lagerung erlaubt und die Variationen der Kraftstoffkosten kompensiert. Insbesondere war es die Aufgabe der Erfindung, ein erworbenes Kraftstoffvolumen z. B. digital mit Hilfe eines Speichermediums zu verwalten und jederzeit und bevorzugt an einer Großzahl an Orten auf dieses Volumen zugreifen zu können.

Die Aufgabe wird durch die unabhängigen Ansprüche gelöst. Vorteilhafte Ausführungsformen ergeben sich aus den Unteransprüchen.

Es wird ein System zum Tanken eines Kraftstoffvolumens auf Vorrat für ein Kraftfahrzeug eines Käufers von einem Verkäufer des Kraftstoffvolumens, der mindestens eine Ausgabevorrichtung, bevorzugt ein Ausgabesystem mit mehreren Ausgabevorrichtungen an verschiedenen Orten für mindestens Teilvolumina des Kraftstoffvolumen besitzt, bereitgestellt, umfassend:
a. Austausch und Vereinbarung zwischen dem Käufer und dem Verkäufer über
   i. den Kaufpreis für jedes auf Vorrat erwobenes Kraftstoffvolumen,
   ii. die Kraftstoffart,
   iii. das zu kaufende Kraftstoffvolumen, über ein
   iv. auszugebendes Teilvolumen des Kraftstoffvolumens an den Käufer zu definierten Zeitpunkten oder innerhalb eines Zeitraumes (Verbrauchszeitraum des Vorrates) und somit über die Menge des Vorrats des Kraftstoffvolumens, der bei dem Verkäufer verbleibt,
   v. die Zeitpunkte oder den Zeitraum der Entgegennahme von weiteren Teilvolumina des Vorrates des Kraftstoffvolumens durch den Käufer mittels der Ausgabevorrichtung und
   vi. Verarbeitung und Speicherung dieser Daten auf einem Speichermedium oder in einem Computerprogrammprodukt,
b. Zahlung eines definierten Preises, insbesondere des Tagespreises ggf. mit Zuschlägen zum Zeitpunkt des Kaufes durch den Käufer an den Verkäufer für das gesamte gekaufte Kraftstoffvolumen und ggf. Entgegennahme von Teilvolumina des Kraftstoffvolumens mittels der Ausgabevorrichtung, insbesondere durch Betanken des Kraftfahrzeuges des Käufers, und Verarbeitung und Speicherung dieser Daten auf einem Speichermedium oder in einem Computerprogrammprodukt
c. Aufbrauchen des Vorrates an Kraftstoffvolumen, insbesondere durch mehrfaches Betanken des Kraftfahrzeuges mittels des Ausgabesystems an einem oder mehreren Orten innerhalb des vereinbarten Zeitraumes oder zu den Zeitpunkten gemäß der gespeicherten Daten nach a. auf dem Speichermedium oder dem Computerprogrammprodukt und/oder
d. Zweitverwertung des Kraftstoffvolumens innerhalb des vereinbarten Zeitraumes oder zu den Zeitpunkten gemäß der gespeicherten Daten nach a. auf dem Speichermedium oder dem Computerprogrammprodukt.

Es wird ein System zum Tanken eines Kraftstoffvolumens auf Vorrat für ein Kraftfahrzeug eines Käufers von einem Verkäufer des Kraftstoffvolumens, der mindestens eine Ausgabevorrichtung, bevorzugt ein Ausgabesystem mit mehreren Ausgabevorrichtungen an verschiedenen Orten für mindestens Teilvolumina des Kraftstoffvolumen besitzt, bereitgestellt. Zwischen dem Käufer und dem Verkäufer findet ein Austausch und eine Vereinbarung über den Kaufpreis für jedes auf Vorrat erwobenes Kraftstoffvolumen statt, das heißt, der Käufer gibt die Kraftstoffart, die er erwerben möchte und das zu kaufende Kraftstoffvolumen an, wobei zwischen dem Käufer und Verkäufer vereinbart wird, ob das auszugebende Teilvolumen des Kraftstoffvolumens an den Käufer zu definierten Zeitpunkten oder innerhalb eines Zeitraumes erfolgen soll. Der Käufer kann so wählen, welche Menge des Vorrats des Kraftstoffvolumens bei dem Verkäufer verbleibt. Der Zeitraum kann im Sinne der Erfindung als Sicherungszeitraum oder Verbrauchszeitraum bezeichnet werden und stellt eine definierte Zeitspanne dar, in der der Käufer insbesondere Kraftstoff aus seinem erworbenen Vorrat nutzen kann und nicht von den Kraftstoffpreisschwankungen des Marktes abhängig ist. Sein erworbener Kraftstoff ist für den Zeitraum bevorzugt gesichert.

Weiterhin treffen Käufer und Verkäufer eine Vereinbarung über die Zeitpunkte oder den Zeitraum der Entgegennahme von weiteren Teilvolumina des Vorrates des Kraftstoffvolumens durch den Käufer mittels der Ausgabevorrichtung. Ein Ausgabesystem bezeichnet im Sinne der Erfindung Kraftstoffausgabestellen, insbesondere Tankstellen, die Ausgabevorrichtungen, insbesondere Zapfsäulen, zur Ausgabe von Kraftstoff aufweisen. Es kann sich bei den Ausgabesystem jedoch auch um mobile Kraftstofftransporter handeln. Die Ausgabevorrichtungen umfassen weiterhin Vorrichtungen, mit denen spezielle Kraftstoffe, umfassend elektrischer Strom, Biogase oder Wasserstoff (gasförmig oder flüssig) ausgegeben werden können. Auch kann es bevorzugt sein, Batterien als Kraftstoff auszugeben.

Die Vereinbarungen, das heißt die Daten oder Informationen über den Kauf, werden auf einem Speichermedium oder in einem Computerprogrammprodukt verarbeitet und gespeichert. Der Käufer zahlt, nach erfolgreicher Vereinbarung, einen definierten Preis, insbesondere den Tagespreis ggf. mit Zuschlägen zum Zeitpunkt des Kaufes an den Verkäufer für das gesamte gekaufte Kraftstoffvolumen. Der Tagespreis bezeichnet im Sinne der Erfindung den Preis des Kraftstoffes an einem Tag insbesondere dem Tag des Kaufes. Der Käufer kann nach Zahlung eines Geldbetrages an den Verkäufer, ggf. ein oder mehrere Teilvolumina des Kraftstoffvolumens mittels der Ausgabevorrichtung, insbesondere durch Betanken bevorzugt seines Kraftfahrzeuges entgegennehmen. Die Entnahme des Teilvolumen des Kraftstoffvolumens wird von dem Speichermedium oder dem Computerprogrammprodukt verarbeitet und gespeichert. Dem Käufer steht es jedoch frei, die Entnahme zu jedem vereinbarten Zeitpunkt oder innerhalb der vereinbarten Zeitspanne (Sicherungsfrist) vorzunehmen. Der Käufer verbraucht den Vorrat an Kraftstoffvolumen, insbesondere durch mehrfaches Betanken des Kraftfahrzeuges mittels des Ausgabesystems an einem oder mehreren Orten innerhalb des vereinbarten Zeitraumes oder zu den Zeitpunkten gemäß der gespeicherten Daten, die auf dem Speichermedium oder dem Computerprogrammprodukt gespeichert sind. Außerdem kann der Käufer eine Zweitverwertung des Kraftstoffvolumens innerhalb des vereinbarten Zeitraumes oder zu den Zeitpunkten vornehmen, wobei auch dies von dem Speichermedium oder dem Computerprogrammprodukt verarbeitet und gespeichert wird.

Das System ermöglicht einem Käufer, eine größeres Volumen Kraftstoff von einem Verkäufer zu erwerben und das Volumen über einen längeren Zeitraum (Sicherungsfrist) zu benutzen. Der Käufer kann insbesondere eine private oder eine ein Gewerbe betreibende Person sein, die Kraftstoff verwertet, beispielsweise ein Kfz-Nutzer. Der Verkäufer kann beispielsweise ein Tankstellenbetreiber oder jegliche Person sein, die Kraftstoff anbietet. Der Käufer kann individuell entscheiden, an welchem Tag und folglich auch zu welchem Preis, das Kraftstoffvolumen erworben werden soll. Der Käufer kann dementsprechend die wirtschaftliche Lage und den Kostenverlauf des Kraftstoffes beobachten und vorteilhafterweise anhand dieser Informationen beurteilen, wann und ob ein Kraftstoffvolumen erworben werden soll. Er richtet sich bevorzugt nach dem Tagespreis des Kraftstoffes. Der zu zahlende Geldbetrag richtet sich demgemäß nach dem Tagespreis und nach dem gewünschten Kraftstoffvolumen. Der Käufer erwirbt vorteilhafterweise Kraftstoff, wenn der Tagespreis niedrig ist. Das zu diesem Preis erworbene Kraftstoffvolumen kann er über einen vereinbarten Zeitraum verwenden und ist so von potentiellen Kraftstoffpreisschwankungen unabhängig. Für den Verkäufer kann ein Geschäft mit dem Käufer lukrativ sein, da er für den Kauf ggf. Zuschläge zum Zeitpunkt des Kaufes erhält.

Im Sinne der Erfindung ist ein Kraftstoff (auch Treibstoff) ein Brennstoff, dessen Energie durch Umwandlung in beispielsweise Verbrennungskraftmaschinen (beispielsweise Verbrennungsmotor oder Gasturbine) in Antriebskraft umgewandelt wird. Kraftstoffe werden bevorzugt zum Antrieb von Fortbewegungsmitteln (Kraftfahrzeug, Flugzeug oder Schiff) verwendet. Da sie jeweils mittransportiert werden müssen, werden häufig Stoffe mit einer hohen Energiedichte eingesetzt. Aber auch stationäre Verbrennungsmotoren können mit ihnen betrieben werden. Kraftstoffe umfassen Kerosin, Petroleum, Benzin, Leichtbenzin, Synthetisches Benzin, Zweitaktgemisch, Dieselkraftstoff, Alkylatbenzin, Biodiesel, Ethanol-Kraftstoff, Bioethanol, Cellulose-Ethanol, Butanol, Biobutanol, Flüssigerdgas, Flüssiggas (Propan/Butan-Gemisch, auch: Autogas oder LPG bzw. Liquified Petroleum Gas), Methanol, Pflanzenöl, Emulsionskraftstoff, Schweröl, Benzol, Benzin-Benzol-Gemisch (Bibo), Gasöl, Motorpetroleum, XtL-Kraftstoffe, GtL-Kraftstoffe, BtL-Kraftstoffe, CtL-Kraftstoffe, Erdgas, Methan, CNG (Compressed Natural Gas) oder LNG (Liquid Natural Gas), Kompogas, Biogas, Biomethan, Ethan, Dimethylether, Wasserstoff, Biowasserstoff, Holzgas oder Deponiegas. Im Sinne der Erfindung kann Kraftstoff auch elektrischer Strom sein, der beispielsweise in Akkumulatoren (oder nichtwiederaufladbaren Batterien) speicherbar ist. Elektrischer Strom kann auch mittels Brennstoffzellen erzeugt und als Antrieb genutzt werden. Der Fachmann weiß, wie das erfindungsgemäße System auf die genannten Kraftstoffe oder Energiequellen anwendbar ist und, dass das System auf weitere nicht genannte Kraftstoffe ausgeweitet werden kann.

Das System ermöglicht dem Kfz-Nutzer, ein gewisses Volumen an Kraftstoff zu einem definierten Preis an einem definierten Tag zu erwerben, wobei das Kraftstoffvolumen vorteilhafterweise an dem Kaufort verweilt. Es kann jedoch auch vorteilhaft sein, dass das erworbene Kraftstoffvolumen an einem zentralen Lagerplatz des Verkäufers gelagert wird.

Informationen oder Daten über den Kauf werden auf einem Speichermedium oder Computerprogrammprodukt gespeichert. Ein Datenspeicher oder Speichermedium dient im Sinne der Erfindung zur Speicherung von Daten beziehungsweise Informationen. Die Daten umfassen Kraftstoffvolumen, verbleibende Kraftstoffvolumen, Kundeninformation, Kraftstoffart, Kaufpreis und/oder Kaufort. Hierdurch ist der Käufer und das erworbene Kraftstoffvolumen eindeutig identifizierbar. Die Daten können vorteilhafterweise jederzeit um weitere ergänzt werden und liegen bevorzugt in digitaler Form vor. Ein Computerprogrammprodukt ist im Sinne der Erfindung eine Folge von Anweisungen, die bevorzugt auf einem Computer ausgeführt werden. Es kann bevorzugt sein, dass eine Verwaltung des erworbenen Kraftstoffvolumens mittels des Speichermediums oder des Computerprogrammprodukt erfolgt.

Es kann vorteilhaft sein, dass das erworbene Kraftstoffvolumen oder die Information über das erworbene Kraftstoffvolumen an dem Kaufort verbleiben und der Käufer nach einer erfolgreichen Autorisierung oder Identifizierung Zugang zu dem Kraftstoffvolumen beziehungsweise zu dem verbleibenden Kraftstoffvolumen erhält. Die Autorisierungs- beziehungsweise Identifizierungstechniken umfassend beispielsweise die Eingabe einer PIN (Personenidentifikationsnummer) oder biometrischer Identifikationsmethoden. Vorteilhafterweise werden die Informationen über den Kauf des Kraftstoffsvolumen von dem Kaufort (beispielsweise einer Tankstelle) per Datenübertragung (beispielsweise ISDN oder DSL) an weitere Verbrauchsorte wie Tankstellen übermittelt. Hierdurch kann der Käufer des Kraftstoffvolumens bevorzugt an jeder Tankstelle Kraftstoff erwerben, das heißt auf seinen Vorrat zugreifen.

Der Käufer kann das erworbene Kraftstoffvolumen innerhalb eines Zeitraumes aufbrauchen. Ein Zeitraum bezeichnet im Sinne der Erfindung eine definierte Zeitspanne, die vorteilhafterweise zwischen dem Verkäufer und Käufer beim Kauf des Kraftstoffvolumens vereinbart wurde. Der Käufer muss nach dem Erwerb des Kraftstoffvolumens keinen weiteren Kraftstoff während des Zeitraumes erwerben, sondern kann seinen Vorrat aufbrauchen. Er ist nicht von den wirtschaftlichen Schwankungen des Rohölmarktes abhängig, sondern hat ein Kraftstoffvolumen zu einem bestimmten Preis erworben, wobei der Käufer den Zeitpunkt des Kaufes selbst entscheiden kann. Die Mobilitätskosten des Käufers verhalten sich dementsprechend über den Zeitraum bevorzugt konstant und sind folglich kalkulierbar für den Käufer.

Das System ermöglicht weiterhin dem Käufer neben dem Verbrauch des Kraftstoffvolumens eine Zweitverwertung des Kraftstoffvolumens anzustreben. Das heißt, falls der Käufer das Kraftstoffvolumen innerhalb des vereinbarten Zeitraumes nicht aufbraucht, kann er es einer weiteren Person anbieten. Vorteilhafterweise kann das verbleibende Kraftstoffvolumen einfach auf die weitere Person übertragen werden. Es kann jedoch auch vorteilhaft sein, wenn der Käufer das verbleibende Kraftstoffvolumen, welches er ggf. nicht mehr benötigt, an den Verkäufer zurück veräußert. Hierbei kann bevorzugt der aktuelle Tagespreis des Kraftstoffes zur Berechnung des Verkaufpreises herangezogen werden.

Es kann weiterhin bevorzugt sein, dass die Daten auf einem Speichermedium bevorzugt einer Magnetkarte oder Hybridkarte gespeichert werden. Es kann auch vorteilhaft sein, wenn die Daten auf einem mobilen Speicher, umfassend ein Flash-Speicher oder einer Chipkarte gespeichert sind. Die Chipkarte kann beispielsweise eine SIM-Karte (Subscriber Identity Module) sein, die mittels eines Mobiltelefons ausgelesen werden kann. Hierdurch erhält der Kfz-Nutzer beziehungsweise der Käufer die Möglichkeit seinen erworbenen Kraftstoff nach Belieben zu verbrauchen, da alle relevanten Daten auf dem Speichermedium gespeichert sind. Der Käufer kann somit einfach seine Karte an einer Tankstelle bevorzugt des Verkäufers verwenden, um dort auf sein Kraftstoffvolumen zuzugreifen. Vorteilhafterweise kann das Speichermedium an jeglichen Tankstellen verwendet und ausgelesen werden. Die Informationen sind vorteilhafterweise derart auf dem Speichermedium kodiert, das diese auch von einem Kraftstoffautomaten an der Zapfsäule ausgelesen werden können. Das Speichermedium bietet somit die Möglichkeit, bei Bedarf flexibel auf das Kraftstoffvolumen zuzugreifen und beispielsweise ein Kfz zu befüllen. Die Magnet- oder Hybridkarte stellt hierfür einen sicheren Speicherort dar, der wasserresistent, druckunempfindlich und leicht zu transportieren ist.

Es kann jedoch auch bevorzugt sein, dass das Speichermedium ein Massenspeicher mit bevorzugt magnetischer Aufzeichnungstechnik oder Halbleiterspeichertechnik ist. Ein Massenspeicher bezeichnet im Sinne der Erfindung ein Speichermedium, welches eine große Daten- oder Informationsmenge bevorzugt über einen längeren Zeitraum speichert. Vorteilhafterweise kann ein Massenspeicher mit magnetischer Auszeichnungstechnik verwendet werden, der binäre Daten auf die Oberfläche einer rotierenden, ferromagnetischen Scheibe schreibt. Halbleiterspeicher sind im Sinne der Erfindung Datenspeicher, die aus einem Halbleiter bestehen, in die mittels der Halbleitertechnologie integrierte Schaltkreise realisiert werden. Die Daten werden in Form von binären elektronischen Schaltzuständen in den integrierten Schaltungen gespeichert. Hierdurch ist eine dauerhafte und sichere Verwahrung der Informationen möglich, wobei vorteilhafterweise Käufer und Verkäufer jederzeit auf diese Informationen zugreifen können. Es kann folglich bevorzugt sein, dass die Informationen über Datenfernübertragung übertragen werden und Käufer oder Verkäufer über Netzwerkverbindungen, umfassend drahtlose Funknetze und nichtdrahtlose Netze, auf diese zugreifen können. Hierdurch kann beispielsweise der Käufer das verbleibende Kraftstoffvolumen in regelmäßigen oder unregelmäßigen Abständen in einfacher Weise, bevorzugt von seinem Wohnort überprüfen. Der Käufer kann die gespeicherten Information oder Daten jederzeit einsehen und ggf. ändern und erhält eine ausführliche Übersicht über sein verbleibendes Kraftstoffvolumen. Der Verkäufer kann ebenfalls die Käufe des Käufers kontrollieren und die Einhaltung der Vereinbarungen überprüfen. Es kann jedoch auch vorteilhaft sein, dass der Käufer zur Identifizierung und zur Entnahme eines Teilvolumens, gespeicherte Daten beispielsweise seinen Namen oder Wohnort angeben muss. Diese Daten können dann von dem Verkäufer oder Betreiber eines Ausgabesystems verifiziert werden.

Weiterhin kann es vorteilhaft sein, wenn der Käufer Daten über sein verbleibendes Kraftstoffvolumen per Mobilfunk auf sein Mobiltelefon übertragen bekommt. Das Mobiltelefon kann bevorzugt ebenfalls zur Autorisierung verwendet werden, das heißt der Käufer kann über sein Mobiltelefon auf sein Kraftstoffvolumen zugreifen und beispielsweise die Befüllung seines Kfz an einer Tankstelle bewirken. Hierfür ist vorteilhafterweise die Tankstelle, beziehungsweise die Zapfsäule mit einem entsprechenden Empfänger ausgestattet. Somit kann der Käufer in einfacher Weise mobil und flexibel auf sein Kraftstoffvolumen zugreifen.

Es kann bevorzugt sein, dass das Kraftstoffvolumen begrenzt ist, das heißt der Käufer kann bevorzugt nur eine Mindestmenge oder eine Maximalmenge an Kraftstoff erwerben. Eine Mindestmenge für Vorratskäufe von Kraftstoff setzt zwei wesentliche Impulse: Angesichts der Mindestausgabenhöhe wird der Endkunde beziehungsweise der Käufer motiviert den Vorratskauf abzuwägen und Vorratskäufe ohne Mindestwert führen unter Umständen zu Spontankäufen, die wiederum ausschließlich Kontraktionskosten erzeugen. Ferner begrenzt ein maximales Kraftstoffvolumen etwaige Verluste aus fallenden Kraftstoffkosten und damit einhergehend die Gefahr kognitiver Dissonanzen bei Endverbrauchern. Außerdem kann hierdurch sichergestellt werden, dass der Käufer nicht Volumina erwirbt, die in dem Zeitraum nicht verbraucht werden können.

Es ist weiterhin bevorzugt, dass das Kraftstoffvolumen innerhalb eines Zeitraumes aufgebraucht wird, wobei der Zeitraum 1 bis 24 Monate, bevorzugt 2 bis 12 Monate, besonders bevorzugt 3 bis 9 Monate und ganz besonders bevorzugt 6 Monate beträgt. Es hat sich gezeigt, dass insbesondere ein Zeitraum von 1 bis 24 Monaten für Käufer günstig ist, da der Käufer beim Kauf abschätzen kann, wie viel Kraftstoff er in dieser Zeit verbraucht. Dieser Zeitraum kann insbesondere für Käufer günstig sein, die nur zu einem bestimmten Zeitpunkt, einen ausreichenden Geldbetrag für einen Kraftstoffkauf vorliegen haben und mit diesem möglichst für einen langen Zeitraum Kraftstoff erwerben wollen. Ein Zeitraum von 2 bis 12 Monaten ist besonders für flexible Käufer vorteilhaft, die eine hohe Kilometerzahl pro Jahr zurücklegen. Ein Zeitraum von 3 bis 9 Monaten ist ebenfalls für Vielfahrer vorteilhaft oder für Käufer, die nur eine bestimmte Zeit im Jahr Kraftstoff benötigen. Als besonders bevorzugt hat sich ein Zeitraum von 6 Monaten herausgestellt, da die Käufer flexibel auf Preisschwankungen des Kraftstoffes reagieren können und ein nicht zu großes Kraftstoffvolumen erwerben. Ein endlicher Sicherungs- und Verbrauchszeitraum ergibt sich bereits aus den erforderlichen Sicherungsmaßnahmen auf der Beschaffungsseite. Materielle Bedeutung erlangt dieser Zeitraum insbesondere, wenn das spezifische Vorratsguthaben zum Ende des Zeitraumes noch nicht aufgebraucht ist. Dies kann in einer Disparität zwischen geschätztem und tatsächlichem Verbrauch begründet sein. Denkbar ist ebenfalls, dass der Kunde bei sinkender Kraftstoffpreisentwicklung seit Vorratskauf zum Tagespreis getankt hat und das teure Vorratsguthaben nicht genutzt hat. Damit hat der Kunde faktisch innerhalb des Zeitraumes die günstigeren Tagespreise genutzt. Das verbleibende Vorratsguthaben oder Kraftstoffvolumen in Liter kann vorteilhafterweise bei Nutzung nach Ablauf des Zeitraumes aufgebraucht werden. Liegt der Tagespreis höher als der Einkaufspreis kann beispielsweise ein Barausgleich durch Nachzahlung des Kunden erfolgen. Hierbei ergibt sich vorteilhafterweise der Preis für den Vorratskauf aus der Höhe des aktuellen Tagespreises des Kraftstoffes und gegebenenfalls sonstiger Aufschläge.

Im Falle mehrerer Vorratskäufe mit überlappenden Zeiträumen ergibt sich die Frage, zu welchem spezifischen Preis die jeweils zu verbrauchende Kraftstoffmenge aus dem gesamten erworbenen Vorratsvolumen abgerechnet wird. Hier können unterschiedliche Verfahren bevorzugt sein. Unter den Aspekten des kaufspezifischen Zeitraumes und der erforderlichen kundenbezogenen Transparenz sind die FIFO-Methode ("First in First out") und die Durchschnittsmethode bevorzugt. Bei der FI-FO-Methode werden die Kraftstoffvolumen nach dem Zeitpunkt des Kaufes veräußert, d. h. das Kraftstoffvolumen, das zuerst erworben wurde, wird auch wieder zuerst veräußert. Bei der Durchschnittsmethode kann entweder ein arithmetisches Mittel über die Preise der Kraftstoffvolumen errechnet oder ein gleitender Durchschnittspreis ermittelt werden. Beide Methoden ermöglichen für den Käufer eine schnelle und einfache Veräußerung der nicht benötigten Kraftstoffvolumen.

Im Folgenden sollen verschiedene Produktabwicklungsszenarien beispielhaft dargestellt werden, ohne jedoch auf diese begrenzt zu sein.

Fall 1: Verbrauch des gesamten Kraftstoffvolumens innerhalb des Zeitraumes. Der Käufer erwirbt ein Kraftstoffvolumen mit der Erwartung, bei steigenden Kraftstoffpreisen einen Einkaufsvorteil zu realisieren. Setzt diese preisliche Entwicklung ein, erfolgt die beabsichtigte Nutzung der Kraftstoffvolumen.

Fall 2: Zum Auslauf des Zeitraumes verbleiben ungenutzte Kraftstoffmengen. Dieser Fall tritt im Wesentlichen dann ein, wenn der Kraftstoffpreis im Zeitraum unter den Preis sinkt, zu dem das Kraftstoffvolumen erworben wurde. Der Käufer wird ggf. zum tieferen Tagespreis tanken. Verstetigt sich dieser Zustand über den Zeitraum, wird das erworbene Kraftstoffvolumen bis zum Abschluss des Zeitraumes nicht verbraucht. Ein weiterer Grund für ungenutzte Kraftstoffvolumen beim Ablauf des Zeitraumes, kann in der Abweichung zwischen dem für den Zeitraum geschätzten Verbrauch und dem tatsächlichen Mengenverbrauch an Kraftstoff liegen. Bestehen zum Auslauf des Zeitraumes ungenutzte Kraftstoffvolumen, hat der Käufer aus dem ursprünglichen Vorratskauf ausschließlich darauf einen mengenbezogenen Lieferanspruch. Es kann beispielsweise zum Auslauf des Zeitraumes eine Bewertung des erworbenen und ungenutzten Kraftstoffvolumens auf Basis des tagesaktuellen Preisniveaus stattfinden. Hieraus folgt, dass für die monetäre Abwicklung der ungenutzten Kraftstoffvolumen zum Zeitpunkt der jeweiligen Nutzung zwei Szenarien denkbar sind. Zum Einen kann der Tagespreis unter dem Kaufpreis liegen. Aus dem ungenutzten Kraftstoffvolumen wird je nach Gebrauch getankt und es erfolgt kein Barausgleich. Dem Kunden verbleibt die Möglichkeit, bei stark gesunkenen Preisen erneute Kraftstoffvolumen im Rahmen eines neuen Kaufes zu erwerben, mit der Chance auf einen daraus resultierenden Vermögensvorteil. Zum Anderen kann der aktuelle Tagespreis über dem Kaufpreis liegen. Die offene Vorratsmenge wird getankt und es erfolgt eine nachträgliche Abrechnung mit Barausgleich zum Tagespreis.

Weiterhin besteht für ungenutzte Kraftstoffvolumen im Zeitraum eine Möglichkeit zur Zweitverwertung. Diese Zweitverwertung kann insbesondere dann vorteilhaft sein, wenn der Tagespreis innerhalb des Zeitraumes deutlich oberhalb des Kaufpreises liegt und gleichzeitig der betroffene Käufer das erworbene Kraftstoffvolumen innerhalb des Zeitraumes nicht vollständig verbrauchen wird. In diesem Fall kann es für den Käufer vorteilhaft sein, wenn der Käufer das nicht benötigte Kraftstoffvolumen oder ein Teilvolumen gegen Entgelt an einen anderen Kunden überträgt. Dies kann beispielsweise im Rahmen einer Kundentankkarte oder einer elektronischen Plattform erfolgen.

Ein Kfz-Nutzer erhält vorteilhafterweise durch das System die Möglichkeit im Rahmen eigener Disposition und Einschätzung Kraftstoff auf Vorrat zu erwerben. Dies eröffnet ihm die Chance aber auch das Risiko den aktuellen Preis für Kraftstoff antizipativ zu fixieren und damit für die erworbene Menge an Kraftstoff und innerhalb des Zeitraumes nicht mehr an künftigen Preisentwicklungen zwanghaft partizipieren zu müssen. Im Falle sinkender Kraftstoffkosten bedeutet dies einen Vermögensnachteil und im Falle steigender Kraftstoffkosten einen Vermögensvorteil.

## Patentansprüche

1. System zum Tanken eines Kraftstoffvolumens auf Vorrat für ein Kraftfahrzeug eines Käufers von einem Verkäufer des Kraftstoffvolumens, der mindestens eine Ausgabevorrichtung, bevorzugt ein Ausgabesystem mit mehreren Ausgabevorrichtungen an verschiedenen Orten für mindestens Teilvolumina des Kraftstoffvolumen besitzt, umfassend
a. Austausch und Vereinbarung zwischen dem Käufer und dem Verkäufer über
i. den Kaufpreis für jedes auf Vorrat erwobenes Kraftstoffvolumen,
ii. die Kraftstoffart,
iii. das zu kaufende Kraftstoffvolumen, über ein
iv. auszugebendes Teilvolumen des Kraftstoffvolumens an den Käufer zu definierten Zeitpunkten oder innerhalb eines Zeitraumes (Verbrauchszeitraum des Vorrates) und somit über die Menge des Vorrats des Kraftstoffvolumens, der bei dem Verkäufer verbleibt,
v. die Zeitpunkte oder den Zeitraum der Entgegennahme von weiteren Teilvolumina des Vorrates des Kraftstoffvolumens durch den Käufer mittels der Ausgabevorrichtung und
vi. Verarbeitung und Speicherung dieser Daten auf einem Speichermedium oder in einem Computerprogrammprodukt,
b. Zahlung eines definierten Preises, insbesondere des Tagespreises ggf. mit Zuschlägen zum Zeitpunkt des Kaufes durch den Käufer an den Verkäufer für das gesamte gekaufte Kraftstoffvolumen und ggf. Entgegennahme von Teilvolumina des Kraftstoffvolumens mittels der Ausgabevorrichtung, insbesondere durch Betanken des Kraftfahrzeuges des Käufers, und Verarbeitung und Speicherung dieser Daten auf einem Speichermedium oder in einem Computerprogrammprodukt
c. Aufbrauchen des Vorrates an Kraftstoffvolumen, insbesondere durch mehrfaches Betanken des Kraftfahrzeuges mittels des Ausgabesystems an einem oder mehreren Orten innerhalb des vereinbarten Zeitraumes oder zu den Zeitpunkten gemäß der gespeicherten Daten nach a. auf dem Speichermedium oder dem Computerprogrammprodukt und/oder
d. Zweitverwertung des Kraftstoffvolumens innerhalb des vereinbarten Zeitraumes oder zu den Zeitpunkten gemäß der gespeicherten Daten nach a. auf dem Speichermedium oder dem Computerprogrammprodukt.

2. System nach Anspruch 1,
**dadurch gekennzeichnet, dass**
das Kraftstoffvolumen innerhalb eines Zeitraumes aufgebraucht wird, wobei der Zeitraum 1 - 24 Monate, bevorzugt 2 - 12 Monate, besonders bevorzugt 3 - 9 Monate und ganz besonders bevorzugt 6 Monate beträgt.

3. System nach Anspruch 1 oder 2,
**dadurch gekennzeichnet, dass**
das Speichermedium eine Magnetkarte oder eine Hybridkarte ist.

4. System nach einem oder mehreren der vorherigen Ansprüche,
**dadurch gekennzeichnet, dass**
das Speichermedium ein Massenspeicher mit magnetischer Aufzeichnungstechnik oder Halbleiterspeichertechnik ist.

5. System nach einem oder mehreren der vorherigen Ansprüche,
**dadurch gekennzeichnet, dass**
eine Autorisierung mittels einer PIN oder biometrischer Mittel erfolgt.

6. System nach einem oder mehreren der vorherigen Ansprüche,
**dadurch gekennzeichnet, dass**
die Daten über Datenfernübertragung übertragen werden.

7. System nach einem oder mehreren der vorherigen Ansprüche,
**dadurch gekennzeichnet, dass**
das Kraftstoffvolumen begrenzt ist.

8. System nach einem oder mehreren der vorherigen Ansprüche,
**dadurch gekennzeichnet, dass**
wenigstens ein Teil des Kraftstoffvolumens auf einen weiteren Käufer übertragen wird.

9. System nach einem oder mehreren der vorherigen Ansprüche,
**dadurch gekennzeichnet, dass**
das Kraftstoffvolumen innerhalb des Zeitraumes verbraucht wird.

10. System nach einem oder mehreren der vorherigen Ansprüche,
**dadurch gekennzeichnet, dass**
das Kraftstoffvolumen nicht innerhalb des Zeitraumes verbraucht wird.
